# EUROPEAN PATENT SPECIFICATION

(11) **EP 4 056 015 B1**
(45) Date of publication and mention of the grant of the patent: **23.04.2025**
(21) Application number: 20885882.9
(22) Date of filing: 04.11.2020
(51) Int. Cl.: A01B 69/04, A01C 21/00, G05D 1/00

(54) **AGRICULTURAL INPUT DEPOSITION METHOD**
VERFAHREN ZUM DEPONIEREN EINES LANDWIRTSCHAFTLICHEN EINTRAGS
PROCÉDÉ DE DÉPÔT D'INTRANTS DE L'AGRICULTURE

(30) Priority: 08.11.2019 BR 102019023538
(43) Date of publication of application: 14.09.2022
(73) Proprietor: Robert Bosch Limitada, CEP: 13065-900 - Campinas - SP (BR)
(72) Inventor: DA SILVA FOGAÇA, Daniel, 80.215-182 Curitiba - PR (BR); SEDOSKI JUNIOR, Marcelo Luis, 81.270-720 Curitiba - PR (BR); SIONEK, Guilherme, 82015-690 Curitiba - PR (BR)
(74) Representative: Michalski Hüttermann & Partner Patentanwälte mbB
(86) International application number: PCT/BR2020/050451
(87) International publication number: WO 2021/087589

(56) References cited:
- EP-A1- 3 014 993
- US-A1- 2011 172 811
- US-A1- 2011 172 811
- US-A1- 2013 124 055
- US-A1- 2013 124 055
- US-A1- 2017 112 049
- US-A1- 2017 112 049

## Description

### Specification of the Patent for "METHOD OF INPUT DEPOSITION"

This invention refers to large scale mechanization, to the precision agriculture and to the concept of state machines. More specifically, this invention refers to a method of input deposition (seeds, fertilizers, etc.)

### STATE OF ART

During the input deposition process in an agricultural application, it is highly relevant to optimize the use of worked areas. Within this context, the optimization of worked areas is related to the prevention of input overlapping, and to better yield obtained from input deposition.

The concern about overlapping is also related to the spacing and curves left by the agricultural set (implement and tractor). Seeds planted very close to each other shall fight for nutrients, being consequently unable to show an efficient development, while seeds planted very far from each other shall not bring benefits to the planted area. Similarly, the manure once more applied to the same area shall visibly result into an overloaded planting.

Theoretically, the function that ensures non-overlapping of inputs must only check if the deposition spot is located or not in a previously traversed region.

A manner to perform such checking includes a methodology to discretize the trajectory, by dividing it into small adjacent areas. These discrete areas are more easily compared to the coordinates of the object, so as to identify if said object is or not located inside the relevant discrete area.

In farming, the trajectory is a highly important issue to allow farmers obtaining better yields from land optimization and from the prevention of waste of agricultural inputs, such as seeds, manure, and fertilizers. And such optimization is only achieved through techniques the implement predefined trajectories and geolocation coordinates.

Of note, seeding, one of the most critical steps in vegetable cultures, is determinant to the level of profits obtained by a farmer, and, as such, must be really optimal. Optimization results from the use of row planting techniques, wherein all the plants are distributed in lines. This facilitates the flow inside the plantation and enables each vegetable to remove from the soil the precise amount of nutrients as needed to its healthy growth. Foch such, the agricultural machinery relies on technology enough to allow the deposit of each seed at a previously defined distance from the other.

Additionally, in the use of the row planting technique intended to obtain the best yields for the whole crop, crossings of rows can take place. This specific situation can be critical, as an imperfect crossing may give rise to real risks of overlapping seeds and other agricultural inputs, with a consequent inefficiency in the sowing and waste of seeds, manure, and fertilizers.

To avoid duplicity or overlap of agricultural inputs in case of such crossing, some techniques are implemented through highly complex algorithms, that represent expensive costs with the planting systems incorporated to agricultural machines.

One of the manners to identify if the spot to be planted is located in the intersection is the use of a technique to discretize the trajectory into small adjacent polygons containing areas, thus checking if a certain spot previously planted belongs to any of these areas. This well-known technique starts by identifying the spot one intends to determine if it belongs to the trajectory. Once identified the spot, an infinite line is drawn from it, from the left to the right. This technique considers the number of times the line intercepts the polygon. If the line only intercepts the polygon once, then the spot is inside the polygon. Whenever the line intercepts the polygon twice or never, then the spot is outside the polygon, thus indicating that said spot would be outside an intersection of plant rows. However, according to the spot position and to the geometry of the polygon, the spot can be outside the polygon and intercept it in a single spot - a vertex -, in which case the technique shall possibly induce a "false positive" response (erroneous indication of a result, given that the correct indication should be precisely the opposite).

In this technique, the application of correction filters to eliminate possible mistakes and to reach a very quick and accurate result requires the use of an extremely big and robust processing unit, as the mathematical calculations behind said technique are highly complicated. And the use of big and robust processing units can represent a limitation in terms of costs, dimension and/or weight, thus compromising its feasibility in a certain application.

For instance, in applications for seeder machines, where the number of planting rows uses to be very significant and each row is activated by a motor reductor-type electromechanical equipment, each group of motor reductors (usually around 5 or 6) is controlled by a control and processing unit ("artificial intelligence" of electromechanical activations) that can, among other functions, control the non-deposition of seeds in lands where they had been previously planted, thus preventing the formation of overlapped planting zones. And the bigger is the number of data to be processed, the bigger is the processing unit, which implies an increased unit price at the same proportion.

Therefore, the existing techniques for determining if a certain object is placed inside some area require a series of highly complex calculations to avoid "false positive" results, as well as an extremely robust, large and expensive processing unit. Known techniques are disclosed in documents US 2017/112049 A1, US 2011/172811 A1, and US 2013/124055 A1.

### OBJECTIVES OF THE INVENTION

This invention intends to provide a method for continuous, quick, and accurate checking as to whether a certain spot (or more than one) is inside or outside a route.

Another objective of this invention is to prevent overlapping of previously planted areas and/or inputs.

Additionally, this invention intends to provide a method of input deposition focused on large productive areas considered homogeneous.

Moreover, an object of this invention is to provide a method of input deposition based on the state machine concept.

### BRIEF DESCRIPTION OF THE INVENTION

To circumvent the inconveniences from the state of art, this invention refers to a deposition method of, at least, an input by a vehicle through a trajectory traversed, wherein the trajectory is defined by a plurality of adjacent polygonal forms and the method comprises the steps of:
- inserting a time information to start the input deposition, and an information of time to stay the input deposition;
- determining a current position to the input deposition;
- determining a future position to the input deposition in the direction of the vehicle's speed in movement;
- checking the position of a spot estimated to the input deposition in relation to the trajectory traversed by the vehicle;
- determining if the input deposition condition comprises one of: a first condition, a second condition, a third condition and a fourth condition, and
- performing an action.

So, as explained in detail below, the method of this invention uses an extremely easy and cost-saving technique to determine if an object is inserted into a certain internal area of a polygon.

Additionally, as the method of this invention allows the identification of a previously planted area, the input shall be no longer placed in said previously planted area, or in areas very close to it.

### BRIEF DESCRIPTION OF THE FIGURES

FIGURE 1a - Image of an heterogenous and non-optimized planting, with overlapped seeds.
FIGURE 1b - Illustrative scheme of an heterogenous and non-optimized planting, with overlapped seeds.
FIGURE 2a - Image of a homogeneous and optimized planting, without seed overlapping.
FIGURE 2b - Illustrative scheme of a homogeneous and optimized planting, without seed overlapping.
FIGURE 3 - Illustrative scheme of a polygonal form comprised by the input deposition method according to this invention.
FIGURE 4 - Illustrative scheme of a first condition of the input deposition method according to this invention.
FIGURE 5 - Illustrative scheme of a second condition of the input deposition method according to this invention.
FIGURE 6 - Illustrative scheme of a third condition of the input deposition method according to this invention.
FIGURE 7 - Illustrative scheme of a fourth condition of the input deposition method according to this invention.

### DETAILED DESCRIPTION OF THE FIGURES

Firstly, to obtain better yields from the input deposition area within a context of smart planting, this invention intends to determine the moment when the actuator of an agricultural set (implement and tractor) must change its condition to preventing overlapping of the input.

Such determination is previously guaranteed by the function, and then by the calibration in field. This function is used through polygons previously built and intends to calculate the distance to the border of a previously defined area.

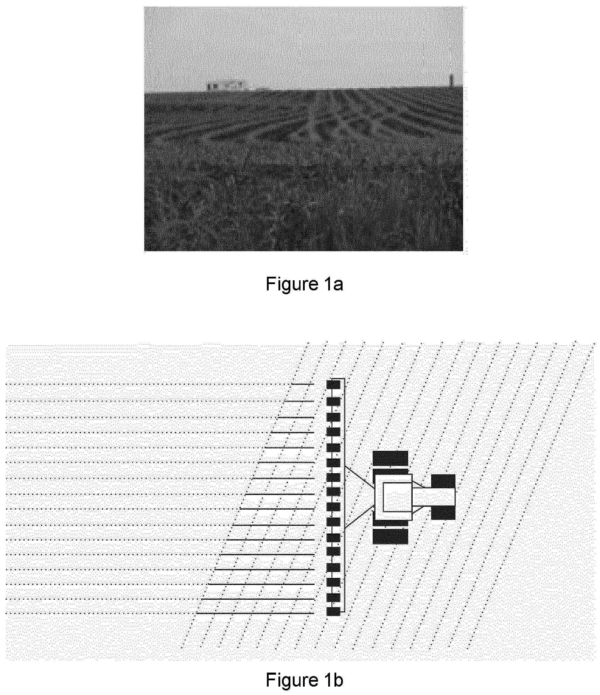

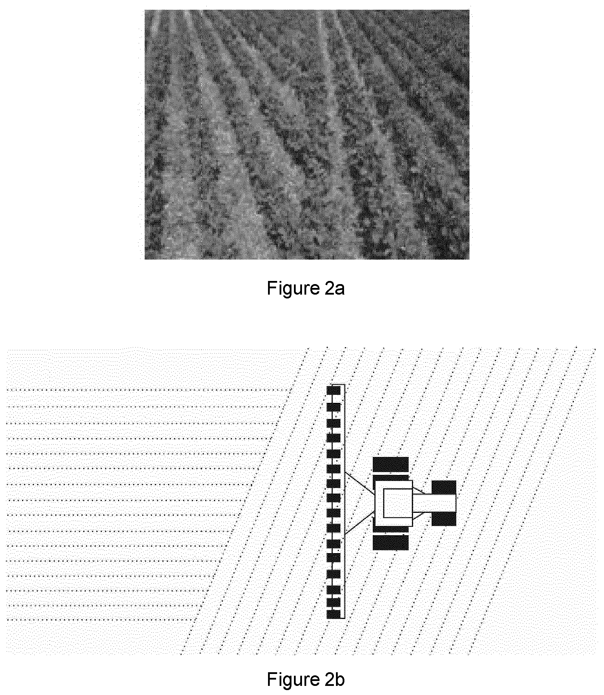

As noted in the figures 1a, 1b, 2a and 2b of this application, there is a clear difference between a heterogeneous and non-optimized planting with overlapped seeds (figures 1a and 1b) and a homogeneous and optimized field without overlapped seeds (figures 2a and 2b).

So, determining the moment when the actuator of the agricultural set (implement and tractor) must change its condition is a relevant characteristic to prevent input overlapping.

Under this perspective, the planting homogeneity and optimization according to this invention, as shown by the figures 2a and 2b, result from a combination of condition wherein, in a polygon previously built in a previously defined area, an algorithm checks the estimate of a spot for a decision-making process.

The decision-making process according to the invention refers to the state machine concept, wherein the operation of an algorithm is represented and directed in a finite number of states, at a defined execution order.

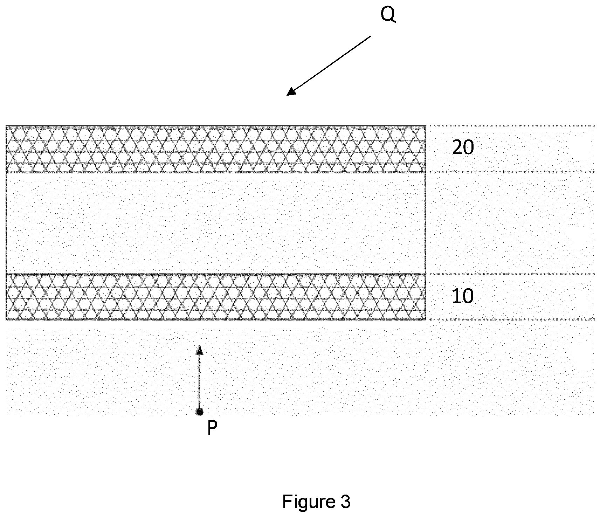

Moreover, as seen in the figure 3, this invention refers to an algorithm that checks, in a polygon previously built, if the estimate of a spot is inside or outside a regular polygon Q, and also checks in which regular polygon Q and/or polygon segment the estimated spot is located, so that a decision can be taken.

Of note, the regular polygon Q comprises, in its perimeter, two regions for decision making: delayed stay 10, delayed start 20, namely the hachures in the figure 3 and its core portion in a planting area, namely the non-hachures in the figure 3. The region to deliberate a delayed stay 10 is defined by a time measurable from the command to stay the input deposition and the effective stay thereof; on its turn, the region to deliberate a delayed start 20 is defined by a time measurable from the command to start the input deposition and the effective application thereof (input coming to the soil).

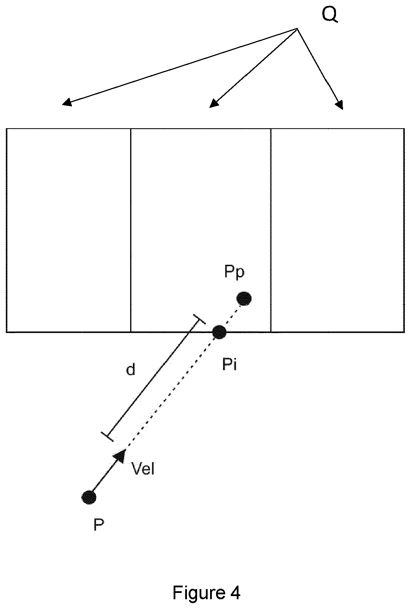

As observed in the figures 4 to 7, the method according to this invention refers to the deposition of at least an input applied by a vehicle that traverses a trajectory defined by a plurality of adjacent regular polygonal forms Q, through the steps of:
- inserting a time information to start the input deposition, and an information of time to stay the input deposition;
- determining a current position P to the input deposition;
- determining a future position Pf for input deposition in the direction of the vehicle's speed in movement;
- checking a position of the estimated spot Pp for input deposition Pp in relation to the trajectory traversed by the vehicle;
- determining if the condition of input deposition comprises one of: a first condition 1, a second condition 2, a third condition 3, and a fourth condition 4; and
- performing an action.

More specifically, as to the step of inserting a time information to start and/or stay the input deposition, one notes that said time refers to the delay of the system's reply to start/stay the input deposition, that, on its turn, is related to the characteristics of the regions delayed stay 10 and delayed start 20 of a polygon previously built. Additionally, one observes that such delay comprises the sum of times associated to the following factors: time to forward the command to the actuator; time of reaction from actuators in presence of input inside the distribution pipes; time of arrival of the input in the soil, by gravity.

On their turn, the steps of determining/checking the condition of input deposition are related to the characteristics of checking, whenever the current and the future positions of input deposition are contained in the trajectory traversed by the vehicle. The vehicle can be an agricultural machine.

As refers to the step of determining a future position for input deposition at the speed of the vehicle in movement, this latter is calculated and inserted in a control unit.

The method of input deposition still comprises regular polygon in quadrilateral format.

So, the method according to this invention advantageously allows the recognition of a previously planted area, so that, as the set (implement and tractor) comes close, the actuator is not activated and does not deposit input in the same area, or in areas very close to it.

More specifically, as seen in the figures 4 to 7, the method according to this invention comprises complying with, at least, one among four conditions, namely a first 1, a second 2, a third 3, and a fourth 4 condition, wherein:
- a line d is drawn from the current position P of the vehicle to the future position Pf for input deposition, in the sense of the vehicle's displacement;
- one checks the occurrence of an intersection spot Pi between the line d in the sense of vehicle's speed and the perimeter of, at least, a regular polygon Q;
- the distance from the current position P of the vehicle to the intersection spot Pi is calculated;
- the time for displacement of a vehicle, from the current position P to the intersection spot Pi is calculated;
- The calculated time for displacement is compared with the time information to start the input deposition, and with the time information to stay the input deposition.

As seen in the figure 4, in the first condition 1, the current position P of the vehicle is outside a regular polygon Q.

In this condition, the algorithm estimates a point Pp in the direction of the speed of the vehicle in movement, at a distance d relating to the delayed stay 10.

Then, one checks the occurrence of an intersection Pi between the estimated spot Pp and the closest regular polygon Q. Once verified the intersection Pi, the closest Pp is saved.

Once saved the estimated spot Pp, one calculates the time required for a vehicle to reach the border of the perimeter delayed stay 10, wherein said time considers the distance d from the current spot P of the vehicle to the intersection spot Pi, as well as the speed of the vehicle in movement vel.

The time required to the vehicle's displacement is compared to the time information about delayed stay 10, and, then, the algorithm decides about the need of turning the engine off, and following to the second condition 2.

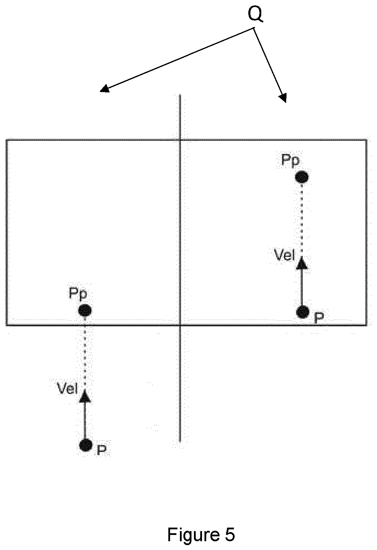

Consequently, the figure 5 shows the second condition 2, wherein the algorithm estimates a spot Pp in the direction of speed of the vehicle in movement (vel).

Then, one checks if the estimated spot Pp is not inside a regular polygon Q; if it is not located in any regular polygon Q, the algorithm returns to the condition 1.

If the estimated spot Pp is located inside a regular polygon Q, and the current spot P of the vehicle is outside this same regular polygon Q, then the set remains at the current condition until, at least, one of the actions: starting the input deposition; keeping the input deposition, staying the input deposition and keeping the input deposition stayed.

Once checked that the estimated spot Pp is inside a regular polygon Q, and that the current spot P of the vehicle is inside that same regular polygon Q, then the algorithm is activated to the third condition 3..

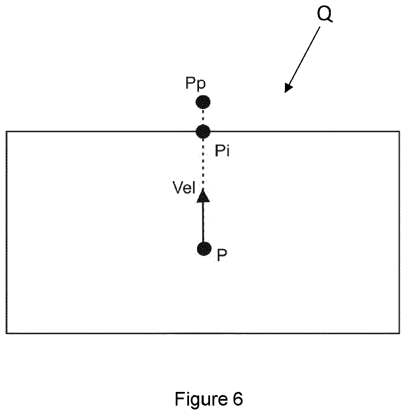

In the third condition 3, as shown by the figure 6, the current position P of the vehicle is inside a regular polygon Q.

In this condition, the algorithm estimates a spot Pp in the direction of the speed of the vehicle in movement (vel), at a distance d from the delayed start 20.

Then, the estimated spot Pp is checked.

If the estimated spot Pp is inside any regular polygon Q, the set remains in its current condition, until at least one of the actions: starting the input deposition, keeping the input deposition, staying the input deposition and keeping the input deposition stayed.

If the estimated spot Pp is outside any regular polygon Q, the algorithm shall determine the distance d to the intersection spot with the closest regular polygon Q, and the closest Pp shall be saved.

Once the estimated spot Pp is saved, the time required for the vehicle to reach the border of the perimeter without delayed start 20 is calculated by considering the distance from the current spot P of the vehicle to the intersection spot Pi and the speed of the vehicle in movement (vel).

The time required to the vehicle's displacement is compared to the time information on delayed start 20; if the calculated time exceeds the delayed start 20, the engine is turned on and the algorithm proceeds to the fourth condition 4.

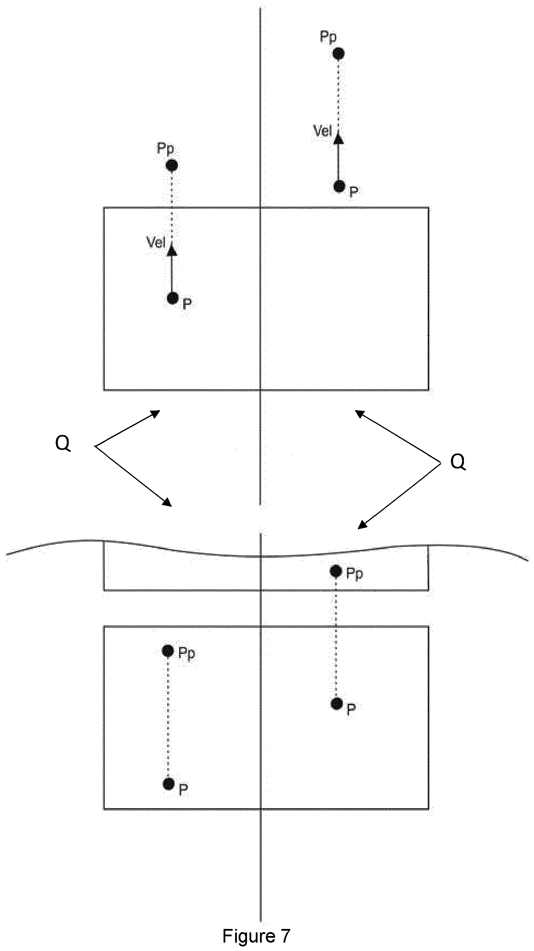

Last, the figure 7 discloses the fourth condition 4 of the method according to this invention, wherein, upon estimate of the spot in the direction of speed of the vehicle in movement (vel), at a distance d from the delayed start 20, the algorithm checks if the estimated spot Pp and the current spot P are inside or outside regular polygons Q.

If the estimated spot Pp is outside any regular polygon Q and the current spot P is inside any regular polygon Q, the set remains at the current condition, among at least one of the actions: starting the input deposition, keeping the input deposition, staying the input deposition and keeping the input deposition stayed.

If the estimated spot Pp and the current spot P of the vehicle are outside any regular polygon Q, the algorithm is directed to the first condition 1.

If the estimated spot Pp and the current spot P of the vehicle are inside a same regular polygon Q, the algorithm is directed to the third condition 3.

If the estimated spot Pp is inside a regular polygon Q and the current spot P of the vehicle is inside another regular polygon Q, the algorithm is directed to the first condition 1.

Of note, the determination of the first 1, second 2, third 3 and fourth 4 conditions advantageously allows considering a set of characteristics during the decision-making process by the algorithm, namely the time of reply from the system, the sum of replies from actuators and the dynamics of the movement of the machine and of the inputs to be placed.

So, the algorithm ensures the input deposit in a correct position, thus providing to the planting a correct distribution of nutrients per seed, as well as a correct distribution of manure, for instance. The method prevents an overloaded planting and contributes to an efficient farming.

Therefore, this invention circumvents all the inconveniences presented by inaccurate prior art techniques, by implementing an easy, quick and accurate solution.

## Claims

1. : Method of the deposition of, at least, an input by a vehicle traversing a trajectory defined by a plurality of adjacent regular polygonal forms (Q), wherein the method comprises the steps of:
• inserting a time information to start the input deposition and a time information to stay the input deposition;
• determining a current position (P) for the input deposition;
• determining a future position for input deposition in the direction of the speed of the vehicle in movement (vel);
• checking the position of the estimated spot (Pp) for input deposition in relation to the trajectory traversed by the vehicle; the method being **characterized by**:
• determining if the input deposition condition comprises one of the following: a first condition (1), a second condition (2), a third condition (3) and a fourth condition (4);
wherein an algorithm checks if, in a first condition (1), the current condition (P) of the vehicle and the estimated spot (Pp) cross outside a regular polygon (Q); in a second condition, if the current spot (P) of the vehicle and the estimated spot (Pp) are inside the same regular polygon (Q); in the third condition, if the current spot (P) of the vehicle is inside a regular polygon (Q) and if the estimated spot (Pp) is outside any regular polygon (Q); and, in the fourth condition, if the current spot (P) of the vehicle and the estimated spot (Pp) are inside or outside regular polygons (Q), and
• executing an action.

2. Method according to claim 1, **characterized by** the fact that the regular polygons (Q) comprise regular quadrilateral forms.

3. Method according to claim 1, **characterized by** the fact that the determination of at least one input deposition condition comprises the steps of checking if the current position (P) and the future position (Pf) are contained in the trajectory traversed by the vehicle.

4. Method according to claim 1, **characterized by** the fact that the determination of the first condition (1), of the second condition (2), of the third condition (3) and of the fourth condition (4) comprises one of the following actions: starting the input deposition; keeping the input deposition; staying the input deposition and keeping the input deposition stayed.

5. Method according to claim 1, **characterized by** the fact that the vehicle comprises an agricultural machine.

6. Method according to claim 1, **characterized by** the fact that the determination of the first condition (1), of the second condition (2), of the third condition (3) and of the fourth condition (4) comprises the steps of:
• dividing the trajectory traversed by the vehicle into a plurality of regular polygons (Q) adjacently placed, and having a limiting perimeter;
• drawing a line (d) from the current position (P) of the vehicle to the future position for input deposition, in the sense of the vehicle's displacement;
• checking the occurrence of an intersection spot (Pi) between the line in the sense of vehicle's speed and the perimeter of, at least, a regular polygon (Q);
• calculating the distance from the current position (P) of the vehicle to the intersection spot (Pi);
• calculating the time required for a vehicle to move from the current position (P) to the intersection spot (Pi);
• comparing the calculated time of displacement to the time information to start the input deposition, and to the time information to stay the input deposition.

7. Method according to claim 6, **characterized by** the fact that the regular polygons (Q) comprise regular quadrilateral forms.

8. Method according to any of claims 1 to 7, **characterized by** the fact that the determined future position (Pf) is calculated.

9. Method according to any of claims 1 to 8, **characterized by** the fact that the determined future position is inserted into a control unit.

## Patentansprüche

1. Verfahren zur Abgabe mindestens eines Einsatzgutes durch ein Fahrzeug, das eine Bewegungsbahn abfährt, die durch eine Vielzahl aneinandergrenzender regelmäßiger Polygonformen (Q) definiert ist, wobei das Verfahren die folgenden Schritte umfasst:
• Eingeben einer Zeitinformation zum Starten der Einsatzgutabgabe und einer Zeitinformation zum Anhalten der Einsatzgutabgabe;
• Bestimmen einer aktuellen Position (P) zur Einsatzgutabgabe;
• Bestimmen einer zukünftigen Position zur Einsatzgutabgabe in der Richtung der Geschwindigkeit des sich bewegenden Fahrzeugs (vel);
• Prüfen der Position der geschätzten Stelle (Pp) zur Einsatzgutabgabe in Bezug auf die von dem Fahrzeug abgefahrene Bewegungsbahn; wobei das Verfahren durch Folgendes gekennzeichnet ist:
• Bestimmen, ob der Einsatzgutabgabezustand einen der folgenden umfasst: einen ersten Zustand (1), einen zweiten Zustand (2), einen dritten Zustand (3) und einen vierten Zustand (4);
wobei ein Algorithmus prüft, ob in einem ersten Zustand (1) der aktuelle Zustand (P) des Fahrzeugs und die geschätzte Stelle (Pp) sich außerhalb eines regelmäßigen Polygons (Q) kreuzen; ob in einem zweiten Zustand die aktuelle Stelle (P) des Fahrzeugs und die geschätzte Stelle (Pp) innerhalb desselben regelmäßigen Polygons (Q) liegen; ob in dem dritten Zustand die aktuelle Stelle (P) des Fahrzeugs innerhalb eines regelmäßigen Polygons (Q) liegt und ob die geschätzte Stelle (Pp) außerhalb eines beliebigen regelmäßigen Polygons (Q) liegt; und ob in dem vierten Zustand die aktuelle Stelle (P) des Fahrzeugs und die geschätzte Stelle (Pp) innerhalb oder außerhalb regelmäßiger Polygone (Q) liegen, und
• Ausführen einer Handlung.

2. Verfahren nach Anspruch 1, **dadurch gekennzeichnet, dass** die regelmäßigen Polygone (Q) regelmäßige vierseitige Formen umfassen.

3. Verfahren nach Anspruch 1, **dadurch gekennzeichnet, dass** die Bestimmung mindestens eines Einsatzgutabgabezustands die Schritte des Prüfens umfasst, ob die aktuelle Position (P) und die zukünftige Position (Pf) in der von dem Fahrzeug abgefahrenen Bewegungsbahn enthalten sind.

4. Verfahren nach Anspruch 1, **dadurch gekennzeichnet, dass** die Bestimmung des ersten Zustands (1), des zweiten Zustands (2), des dritten Zustands (3) und des vierten Zustands (4) eine der folgenden Handlungen umfasst: Starten der Einsatzgutabgabe; Beibehalten der Einsatzgutabgabe, Anhalten der Einsatzgutabgabe und Beibehalten der angehaltenen Einsatzgutabgabe.

5. Verfahren nach Anspruch 1, **dadurch gekennzeichnet, dass** das Fahrzeug eine landwirtschaftliche Maschine umfasst.

6. Verfahren nach Anspruch 1, **dadurch gekennzeichnet, dass** die Bestimmung des ersten Zustands (1), des zweiten Zustands (2), des dritten Zustands (3) und des vierten Zustands (4) die folgenden Schritte umfasst:
• Unterteilen der von dem Fahrzeug abgefahrenen Bewegungsbahn in eine Vielzahl regelmäßiger Polygone (Q), die aneinandergrenzend platziert sind und einen eingrenzenden Umfang aufweisen;
• Ziehen einer Linie (d) von der aktuellen Position (P) des Fahrzeugs zu der zukünftigen Position zur Einsatzgutabgabe, in der Richtung der Verlagerung des Fahrzeugs;
• Prüfen des Auftretens einer Kreuzungsstelle (Pi) zwischen der Linie in der Richtung der Fahrzeuggeschwindigkeit und dem Umfang mindestens eines regelmäßigen Polygons (Q);
• Berechnen der Distanz von der aktuelle Position (P) des Fahrzeugs zu der Kreuzungsstelle (Pi);
• Berechnen der Zeit, die ein Fahrzeug benötigt, um sich von der aktuellen Position (P) zu der Kreuzungsstelle (Pi) zu bewegen;
• Vergleichen der berechneten Zeit der Verlagerung mit der Zeitinformation zum Starten der Einsatzgutabgabe und mit der Zeitinformation zum Anhalten der Einsatzgutabgabe.

7. Verfahren nach Anspruch 6, **dadurch gekennzeichnet, dass** die regelmäßigen Polygone (Q) regelmäßige vierseitige Formen umfassen.

8. Verfahren nach einem der Ansprüche 1 bis 7, **dadurch gekennzeichnet, dass** die bestimmte zukünftige Position (Pf) berechnet wird.

9. Verfahren nach einem der Ansprüche 1 bis 8, **dadurch gekennzeichnet, dass** die bestimmte zukünftige Position in eine Steuerungseinheit eingegeben wird.

## Revendications

1. Procédé du dépôt, au moins, d'un facteur de production par un véhicule traversant une trajectoire définie par une pluralité de formes polygonales régulières adjacentes (Q), dans lequel le procédé comprend les étapes de :
• l'introduction d'une information de temps pour commencer le dépôt de facteur de production et une information de temps pour arrêter le dépôt de facteur de production ;
• la détermination d'une position actuelle (P) pour le dépôt de facteur de production ;
• la détermination d'une position future pour dépôt de facteur de production dans la direction de la vitesse du véhicule en mouvement (vel) ;
• le contrôle de la position de l'endroit estimé (Pp) pour dépôt de facteur de production relativement à la trajectoire traversée par le véhicule ; le procédé étant **caractérisé par** :
• la détermination que le condition de dépôt de facteur de production comprend ou non une des suivantes :
une première condition (1), une deuxième condition (2), une troisième condition (3), et une quatrième condition (4) ;
dans lequel un algorithme contrôle si, dans une première condition (1), la condition actuelle (P) du véhicule et l'endroit estimé (Pp) se croisent à l'extérieur d'un polygone régulier (Q) ; dans une deuxième condition, si l'endroit actuel (P) du véhicule et l'endroit estimé (Pp) sont à l'intérieur du même polygone régulier (Q) ; dans la troisième condition, si l'endroit actuel (P) du véhicule est à l'intérieur d'un polygone régulier (Q) et si l'endroit estimé (Pp) est à l'extérieur de tout polygone régulier (Q) ; et, dans la quatrième condition, si l'endroit actuel (P) du véhicule et l'endroit estimé (Pp) sont à l'intérieur ou à l'extérieur de polygones réguliers (Q), et
• l'exécution d'une action.

2. Procédé selon la revendication 1, **caractérisé par le fait que** les polygones réguliers (Q) comprennent des formes quadrilatérales régulières.

3. Procédé selon la revendication 1, **caractérisé par le fait que** la détermination d'au moins une condition de dépôt de facteur de production comprend les étapes du contrôle que la position actuelle (P) et la position future (Pf) sont ou non contenues dans la trajectoire traversée par le véhicule.

4. Procédé selon la revendication 1, **caractérisé par le fait que** la détermination de la première condition (1), de la deuxième condition (2), de la troisième condition (3), et de la quatrième condition (4) comprend une des actions suivantes : le commencement du dépôt de facteur de production ; le maintien du dépôt de facteur de production ; l'arrêt du dépôt de facteur de production et le maintien du dépôt de facteur de production arrêté.

5. Procédé selon la revendication 1, **caractérisé par le fait que** le véhicule comprend une machine agricole.

6. Procédé selon la revendication 1, **caractérisé par le fait que** la détermination de la première condition (1), de la deuxième condition (2), de la troisième condition (3), et de la quatrième condition (4) comprend les étapes de :
• la division de la trajectoire traversée par le véhicule en une pluralité de polygones réguliers (Q) placés de façon adjacente, et ayant un périmètre limitatif ;
• le tracé d'une ligne (d) depuis la position actuelle (P) du véhicule jusqu'à la position future pour dépôt de facteur de production, dans le sens du déplacement du véhicule ;
• le contrôle de la survenue d'un endroit d'intersection (Pi) entre la ligne dans le sens de vitesse du véhicule et le périmètre, au moins, d'un polygone régulier (Q) ;
• le calcul de la distance depuis la position actuelle (P) du véhicule jusqu'à l'endroit d'intersection (Pi) ;
• le calcul du temps nécessaire pour qu'un véhicule se meuve depuis la position actuelle (P) jusqu'à l'endroit d'intersection (Pi) ;
• la comparaison du temps calculé de déplacement à l'information de temps pour commencer le dépôt de facteur de production, et à l'information de temps pour arrêter le dépôt de facteur de production.

7. Procédé selon la revendication 6, **caractérisé par le fait que** les polygones réguliers (Q) comprennent des formes quadrilatérales régulières.

8. Procédé selon de quelconques des revendications 1 à 7, **caractérisé par le fait que** la position future déterminée (Pf) est calculée.

9. Procédé selon de quelconques des revendications 1 à 8, **caractérisé par le fait que** la position future déterminée est introduite dans une unité de commande.
